(19) Europäisches Patentamt
European Patent Office
Office européen des brevets

(11) **EP 2 262 610 B1**

(12) **EUROPÄISCHE PATENTSCHRIFT**

(45) Veröffentlichungstag und Bekanntmachung des Hinweises auf die Patenterteilung:
**29.08.2012 Patentblatt 2012/35**

(21) Anmeldenummer: **09728748.6**

(22) Anmeldetag: **31.03.2009**

(51) Int Cl.:
***B23Q 11/00*** *(2006.01)*　　　***F16D 59/02*** *(2006.01)*

(86) Internationale Anmeldenummer:
**PCT/EP2009/053783**

(87) Internationale Veröffentlichungsnummer:
**WO 2009/121862 (08.10.2009 Gazette 2009/41)**

(54) **REVERSIBLES NOTBREMSSYSTEM FÜR WERKZEUGMASCHINEN**

REVERSIBLE EMERGENCY BRAKING SYSTEM FOR MACHINE TOOLS

SYSTÈME DE FREIN DE SECOURS RÉVERSIBLE POUR MACHINES-OUTILS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **31.03.2008 DE 102008000891**

(43) Veröffentlichungstag der Anmeldung:
**22.12.2010 Patentblatt 2010/51**

(73) Patentinhaber: **Robert Bosch GmbH**
**70442 Stuttgart (DE)**

(72) Erfinder: **WINKLER, Thomas**
**07589 Lindenkreuz (DE)**

(56) Entgegenhaltungen:
**DE-A1- 2 147 669　　DE-A1- 19 536 995**
**DE-U1- 8 708 955　　US-A- 4 531 617**
**US-A- 5 105 925**

EP 2 262 610 B1

**Beschreibung**

Stand der Technik

Die vorliegende Erfindung betrifft ein Schutzsystem, insbesondere ein Notbremssystem für eine Werkzeugmaschine, insbesondere für eine Kreissäge, das seine Schutzwirkung innerhalb einer sehr geringen Zeitspanne, die gewöhnlich im Bereich einiger Millisekunden (typischerweise 1 bis 50 ms) liegt, entfaltet, um einen Benutzer der Werkzeugmaschine in Gefahrensituationen vor Verletzungen zu schützen.

Derzeit existieren im Wesentlichen drei verschiedene Ansätze zur Realisierung eines solchen Schutzsystems für Tisch- und Format-Kreissägen, das verhindern soll, dass ein Benutzer mit dem umlaufenden Sägeblatt in Kontakt kommt oder eine folgenschwere Schnittverletzung davonträgt.

Bei dem unter dem Firmennamen Saw Stop Inc. geführten und vertriebenen Schutzsystem eines amerikanischen Herstellers handelt es sich um ein Notbremssystem, das ein Abbremsen der Werkzeugmaschine aufgrund eines direkten Eingriffes einer Brems-Aktorik mit dem Sägeblatt ermöglicht, sobald ein entsprechend gestalteter Sensor eine Gefahrensituation detektiert hat. Hierbei wird durch den Einsatz eines Hitzdrahtauslösers ein drehbar angeordneter Aluminiumblock mit Hilfe einer vorgespannten Feder in die Verzahnung des laufenden Sägeblattes gestoßen, welcher sich darin verkeilt und auf diese Weise die Rotationsenergie aller während des Sägevorgangs umlaufenden Geometrien der Werkzeugmaschine absorbiert. Als Nebeneffekt wird dieser einseitige Kraftangriff auf die Schneiden dazu genutzt, das Sägeblatt durch eine konstruktiv speziell ausgeführte Aufhängung, die am Sägetisch angeordnet ist, in den Sägetisch zu versenken. Mit Hilfe dieser Anordnung ist man dazu in der Lage, folgenschwere körperliche Schäden von dem den Schutzmechanismus auslösenden Bediener der Werkzeugmaschine abzuwenden. Nachteilig ist hierbei der direkte Angriff auf das Bearbeitungswerkzeug, also auf die Schneidengeometrie des Sägeblattes, da durch Ausbrechen von Teilen der Verzahnung zusätzliches Gefahrenpotential für den Bediener entsteht Des Weiteren ist zur Wiederherstellung der Bereitschaft des Schutzsystems ein Austausch der Bremseinheit inklusive des Sägeblattes durch eine einsatzbereite Ersatzeinheit erforderlich, die der Bediener bevorraten muss, um nach erfolgtem Bremsvorgang unter Inanspruchnahme der Schutzfunktion weiterarbeiten zu können. Dies ist mit erheblichen Folgekosten und entsprechendem Zeitaufwand für die Beschaffung und Installierung verbunden. Zudem kann davon ausgegangen werden, dass alle vom Bremsvorgang betroffenen Bauteile, d.h. alle umlaufenden Geometrien der Werkzeugmaschine, starken Beanspruchungen während der Verzögerungsphase ausgesetzt werden. Weder der Hersteller noch entsprechende Veröffentlichungen zu diesem System weisen Daten bezüglich der Dauerfestigkeit der Anlage aus.

Ein weiterer Ansatz verfolgt die Verwendung eines Schutzsystems zur ausschließlichen Absenkung des Sägeblattes im Sägetisch, ohne einen Bremsvorgang des Sägeblattes einzuleiten. Mit Hilfe eines pyrotechnischen Zündsatzes wird hierbei das Sägeblatt inklusive der Hauptwelle und deren Lagerung aus der Gefahrenzone entfernt, so dass schwerwiegende Verletzungen des Bedieners verhindert werden können. Nachteilig an dieser Schutzsystemart ist die Notwendigkeit der Bewegung relativ großer Massen in Form der abzusenkenden Anordnungen unter strengen Zeitvorgaben im Millisekundenbereich. Die hierdurch notwendigen pyrotechnischen Zünder, welche sich für diese Schutz-Aktorik als unerlässlich erweisen, rufen ferner eine teure Teilreversibilität hervor, welche ein sofortiges Weiterarbeiten an der Werkzeugmaschine mit einem einsatzbereiten Schutzsystem sowohl zeitlich als auch organisatorisch einschränken. Weiterhin eignet sich dieses Schutzsystem aus Gründen begrenzten Bauraumes und sehr spezifischer Verfahrensweise nur für größere stationäre Geräte, wie beispielsweise Tischkreissägen, die einen solchen Aufbau in ihrem Innern ermöglichen. Für die Anwendung an kleineren handgeführten Geräten, wie beispielsweise Kapp- und Gehrungssägen oder Paneelsägen, scheidet dieses System hingegen aus.

Eine Offenlegung aus einem öffentlich geförderten Projekt namens "Cut-Stop" (VDI/VDE/IT) zu einem Schutzsystem für Formatkreissägen vom Institut für Werkzeugmaschinen (IFW) der Universität Stuttgart beschreibt einen Ansatz, welcher mittels einer Sonderform einer Scheibenbremsanlage, nämlich einer selbstverstärkenden Keilbremse, die Hauptwelle der Werkzeugmaschine und somit das Sägeblatt zum Stillstand bringt. Hierbei wird mit Hilfe eines pyrotechnischen Zünders ein Keil beschleunigt und anschließend zwischen eine feststehende Keilführung in Form eines modifizierten Bremssattels und die rotierende Bremsscheibe gestoßen. Für die Auswahl und Kombination spezifischer Keilwinkel $\alpha$ und Bremsbelagwerte $\mu$ wirkt die Anordnung selbsthemmend, so dass mit diesem Aufbau in Abhängigkeit der zu verzögernden Massenträgheit die jeweiligen zeitlichen Anforderungen an dem Bremsvorgang erfüllt werden können. Der Nachteil dieses Schutzsystems liegt jedoch darin, dass auch hierbei, wie es in der genannten Veröffentlichung beschrieben wird, im Anschluss an die Auslösung der Schutz-Aktorik ein Austausch der kompletten Bremseinheit aufgrund des sich in der Reibpaarung verklemmenden Keils erforderlich ist. Der benötigte zeitliche Aufwand des durchzuführenden Arbeitsumfangs beläuft sich hierbei auf ca. 10-12 Minuten für die vollständige Wiederherstellung der Systembereitschaft. Somit gilt auch hier eine teilweise Einschränkung der unverzüglichen Systemreversibilität.

Aus der DE 195 36 995 A1 ist eine Sicherheitsbremse für Aufzüge bekannt, die eine Einrichtung aufweist, die bei Überschreiten einer vorgegebenen Höchstgeschwindigkeit des Transportmittels den Antrieb mit einer geschwindigkeitsabhängigen Verzögerung abbremst Und ggfls. auch anhält Die Sicherheitsbremse der DE 195 36 995 A1 wirkt drehzahlabhängig unmittelbar auf die Treibscheibe der seilbetriebenen Förderanlage und vermag deren Drehgeschwindigkeit zu begrenzen. Die als Fliehkraftbremse ausgebildete Sicherheitsbremse weist zusätzlich eine Einrichtung zum Verstärken der Bremskraft in Abhängigkeit von der Fördergeschwindigkeit auf.

Aufgabe der Erfindung

Ausgehend von diesem Stand der Technik ist es eine Aufgabe der vorliegenden Erfindung, ein Schutzsystem einer Werkzeugmaschine, insbesondere ein reversibles Schutzsystem, mit alternativern Aufbau zu schaffen, das seine Schutzwirkung innerhalb einiger Millisekunden entfaltet und die eingangs beschriebenen Probleme zumindest teilweise behebt.

Offenbarung der Erfindung

Vorteile der Erfindung

Zur Lösung dieser Aufgabe schafft die vorliegende Erfindung ein Notbremssystem, insbesondere ein reversibles Notbremssystem, zum schnellen Abbremsen einer umlaufenden Welle einer Werkzeugmaschine, wobei das Notbremssystem eine Bremstrommel und zumindest eine Bremsbacke aufweist, die zum Abbremsen der Welle miteinander unter dem Einfluss der aus der Rotation der Welle resultierenden Fliehkraft bzw. Fliehbeschleunigung in Eingriff gebracht werden. Erfindungsgemäß wird nach einer gezielten Auslösung des Bremssystems diese manuell oder automatisch wieder zurückgesetzt, so dass die Bremseinrichtung erneut in den Bereitschaftszustand übergeht und somit die Schutzfunktion am Gerät erneut vorhanden ist.

Die vorliegende Erfindung ist darauf ausgerichtet das Bremssystem vollständig reversibel zurückzusetzen. Dies geschieht nach erfolgter Aktivierung des Bremssystems idealer Weise ohne den Austausch von Bauteilen, so dass die bei andersartigen Auslöse- / Rücksetzmechanismen entstehenden Folgekosten in vorteilhafter Weise minimiert, bzw. gänzlich verhindert werden können.

Vorteilhafterweise wird bei der Abbremsung der Werkzeugmaschine nicht direkt in das Werkzeug eingegriffen. Ein solcher Eingriff würde unweigerlich mit der Zerstörung des Werkzeuges einhergehen. Die erfindungsgemäße Werkzeugmaschine bremst die das Werkzeug direkt oder indirekt antreibende Welle ab. Auf diese Weise bleibt das Werkzeug selbst unbeschädigt. Insbesondere ist somit eine reversible Sicherheits- bzw. Bremseinrichtung möglich.

Zudem realisiert der erfindungsgemäße Aufbau ein elektromechanisches System ohne die Verwendung weiterer Energieformen, welche unter Umständen die vollständige Reversibilität gefährden und eine Einschränkung für diese bedeuten würden.

Nach einer Systementscheidung zur Rücksetzung des Systems, die eine automatische Entscheidung des Systems auf Grundlage von Sensordaten einer Ansteuerungselektronik und/oder eine bewusste manuelle Handlung des Anwenders, welcher das System erneut in Betrieb zu nehmen wünscht, sein kann, werden Rückstellmittel aktiviert, die zu einer reversiblen Zurücksetzung des Bremssystems führen.

Hier ist es gegebenenfalls sinnvoll und vorteilhaft eine gewisse Totzeit in das System zu integrieren, so dass das Bremssystem beispielsweise erst nach dem Ablauf einiger Minuten zurückgesetzt werden kann oder zurückgesetzt wird.

Auch ist es denkbar, eine Schaltung vorzusehen, die die Zurücksetzung des Bremssystems erst dann erlaubt, wenn das gesamte System und insbesondere die das Bremssystem vorweisende Werkzeugmaschine ausgeschaltet, vom Netz genommen und anschließen wieder aktiviert worden ist.

Insbesondere ist es sinnvoll und vorteilhaft, wenn sich das Bremssystem vor dem Zurücksetzen der Bremse in einem definierten Zustand (Bremszustand) befindet. Ausgehend von einem solchen definierten Bremszustand kann dann eine reproduzierbare Zurücksetzung, evtl. sogar eine automatisierte Zurücksetzung des Bremssystems erfolgen.

Zur Erreichung eines solchen definierten Ausgangszustandes für die Zurücksetzung des Bremssystems, weist dieses in vorteilhafter Weise eine Haltevorrichtung mit einem oder mehreren Halteelementen auf. Diese Haltevorrichtung ermöglicht es, die Bremsbacken nach erfolgter Bremsung sicher und definiert in einer Bremsstellung zu halten. Ohne ein Signal zum Rücksetzen des Systems, welches von einer Ansteuerelektronik des Systems, jedoch auch als bewusste Handlung durch den Anwender erfolgen kann, bleibt das System in diesem geometrisch eindeutigen Zustand, so dass einerseits die Kupplungselemente während des Auslaufens des Motors geschont werden und andererseits keine ungewollte Rücksetzung des Systems stattfindet.

In einer vorteilhaften Ausführung des erfindungsgemäßen Notbremssystems ist die Haltevorrichtung daher erst nach der Systementscheidung zur erneuten Inbetriebnahme des Systems deaktivierbar.

Im Anschluss an eine Rücksetzung ist somit unverzüglich eine erneute Auslösung möglich, wodurch der Schutz des Anwenders am Gerät stets gegeben ist.

Die Rückstelleinrichtung ist dabei in enger Abstimmung mit der Selbstverstärkung der Reibpaarung und damit mit der Geometrie des Bremssystems ausgelegt. Die Rückstelleinrichtung kann beispielsweise sowohl durch den Einsatz von entsprechend dimensionierten Zug- als auch Druckfederelementen realisiert werden.

Eine Verriegelungseinrichtung ist zwischen einer verriegelten Stellung, in der die Bremsbacke an dem Bremsbackenträger gehalten wird, und einer entriegelten Stellung, in der die zumindest eine Bremsbacke derart freigegeben wird dass diese eine Schwenkbewegung in Richtung der Bremstrommel ausführt, verstellbar, um den Bremseingriff zu erzeugen.

In vorteilhafter Weise ist bei der erfindungsgemäßen Bremseinrichtung zur Betätigung der Bremse lediglich eine Ver- bzw. Entriegelungskraft aufzuwenden, da die für die Bremsleistung erforderliche Kraft durch Fliehkräfte des Systems erzeugt wird.

Da die Ver- bzw. Entriegelungskraft deutlich unter den benötigten Bremskräften liegt, kann die Verriegelung auch sehr schnell deaktiviert, d.h. gelöst werden. Dies führt - zusammen mit einer kurzen Bremszeit - zu der sehr kurzen Zeit im Millisekundenbereich (die typischerweise im Bereich von 1 bis 50 ms, vorteilhafterweise im Bereich von 1 bis 20 ms und insbesondere im Bereich von 10ms und weniger liegt), in dem das Bremssystem das Werkzeug einer Werkzeugmaschine abbremsen kann.

Die Verriegelungseinrichtung umfasst bevorzugt zumindest ein Sperrelement, das zwischen einer verriegelten Stellung, in der es mit der zumindest einen Bremsbacke in Eingriff ist, und einer entriegelten Stellung bewegbar ist, in der es von der Bremsbacke entkoppelt ist. Ein solches Sperrelement kann beispielsweise als Sperrbolzen oder dergleichen ausgebildet sein.

In vorteilhafter Weise kann die Halteeinrichtung bzw. die Halteelemente zur definierten Positionierung der Bremsbacken in der Bremsstellung an zumindest einem der Sperrelemente ausgebildet sein.

Die Verriegelungseinrichtung umfasst vorteilhaft einen Aktuator, der die Verriegelungseinrichtung aus der verriegelten Stellung in die entriegelte Stellung überführt. Bei diesem Aktuator kann es sich beispielsweise um einen Magnet-Aktuator handeln, der einen Ringanker zieht, an welchem ein Sperrelement in Form eines Sperrbolzens befestigt ist, um den Sperrbolzen aus der Bremsbacke auszurücken, so dass diese freigegeben wird. Funktionsfähig ist der vorliegende Aktuator im Zusammenspiel mit einem Anker, vorzugsweise als Ankerplatte ausgeführt, welche im Zeitpunkt des Auslösens angezogen wird. Der hierdurch entstehende allseitige Kraftangriff auf die Platte ermöglicht einen gleichmäßigen Zug ohne Querkräfte, so dass einem möglichen Kippen der Ankerplatte vorgebeugt wird. Darüber hinaus ermöglicht die Bestromung des Aktuators und die dadurch verursachte Anziehung des Ankers sehr kurze Reaktionszeiten des Systems.

Zudem besteht die Möglichkeit einer zentrischen Lagerung des Aktuators bzgl. des Bremssystems, wodurch mit Hilfe der Ausführung des Aktuators als Topfmagnet die Durchführung einer An-, Abtriebswelle oder Achse in dessen Zentrum ermöglicht wird. Dies ist als besonders vorteilhaft anzusehen.

Dieser Aktuator könnte somit beispielsweise auch das Haltelement stellen.

Alternativ kann die Halteeinrichtung auch über ein Federelement getrieben sein.

Die vorliegende Erfindung ist darauf ausgerichtet das Bremssystem vollständig reversibel im Bereich weniger Millisekunden auszulösen. Nach erfolgter Aktivierung ist somit in vorteilhafter Weise ein erneutes Auslösen des Systems mittels desselben Aktuators möglich. Dies verhindert die Entstehung der bei anderen Auslösemechanismen auftretenden Folgekosten. Der Aktuator kann in Abstimmung mit den notwendigen Bauraumbedingungen für die gegebenen Anforderungen dauerfest ausgelegt werden und ist somit im Idealfall wartungsfrei.

Die vorliegende Erfindung ist demnach darauf ausgerichtet, die Verzögerung der umlaufenden Welle der Werkzeugmaschine, bei der es sich beispielsweise um eine Tischkreissäge, um eine Kapp- und Gehrungssäge oder um eine Paneelsäge handeln kann, durch die Nutzung der vorhandenen Rotationsenergie der umlaufenden Welle mit Hilfe des Aufbaus einer selbstverstärkenden oder selbsthemmenden Reibpaarung zu realisieren. Auf diese Weise kann der vorgegebene Zeitrahmen der Abbremsung, der im Bereich einiger Millisekunden liegt, gewährleistet werden. Die erfindungsgemäße Ausgestaltung der Bremse erlaubt die Abbremsung eines von einer Welle direkt oder indirekt angetriebenen Werkzeuges in sehr kurzen Zeiten, die typischerweise im Bereich von 1 bis 50 ms, vorteilhafterweise im Bereich von 1 bis 20 ms und insbesondere im Bereich von 10ms und weniger liegen.

Dabei sollte klar sein, dass die eigentliche Auslösung des Abbremsvorgangs, die beispielsweise als Antwort auf ein Ausgangssignal eines Sensors erfolgt, der eine Gefahrensituation für den Benutzer detektiert, mechanisch, elektromechanisch, pyrotechnisch, pneumatisch oder hydraulisch erfolgen kann und prinzipiell an kein bestimmtes Medium gebunden ist, wobei jedoch eine elektromechanische Auslösung aufgrund eines einfachen Aufbaus und einer sehr guten Reversibilität bevorzugt wird.

Das Notbremssystem umfasst zudem bevorzugt eine Kopplungseinrichtung, die derart beschaffen ist, dass sie in ihrer gekoppelten Stellung die abzubremsende Welle mit einem Antriebsstrang verbindet, und dass sie während einer Notbremsung automatisch in ihre entkoppelte Stellung überführt wird, in der die abzubremsende Antriebswelle von dem Antriebsstrang entkoppelt ist. Eine derartige Entkopplung des Antriebsstrangs während eines Notbremsvorgangs stellt sicher, dass der Antriebsstrang, der beispielsweise eine Antriebswelle und etwaige Übersetzungsstufen aufweisen kann, von dem eigentlichen Bremsvorgang ausgeklammert wird, wodurch der Antriebsstrang den während des Bremsvorgangs auftretenden großen Verzögerungsmomenten nicht ausgesetzt ist. Dies bringt zum einen den Vorteil, dass Komponenten des Antriebsstranges aufgrund des Bremsvorgangs nicht beschädigt werden können. Zum anderen müssen die Geometrien der antriebsseitigen Komponenten konstruktiv nicht an die Erfordernisse des Bremsvorgangs angepasst werden, weshalb sie weniger robust und preiswerter produziert werden können. Zusätzlich ergibt sich hierdurch eine nutzbringende Verringerung des zu verzögernden Massenträgheitsmomentes, da die Komponenten des Antriebsstranges nicht abgebremst werden müssen. Somit kann die Systemlast während der Verzögerungsphase entscheidend vermindert werden. Entsprechend kann die für den Abbremsvorgang des Sägeblattes erforderliche Zeitdauer bei gleicher Krafteinwirkung wesentlich verkürzt werden. Alternativ kann natürlich auch die Krafteinwirkung bei unveränderter Abbremszeitdauer verringert werden.

Gemäß einer bevorzugten Ausgestaltung ist die abzubremsende Welle als Hohlwelle ausgebildet, in deren Hohlraum eine Antriebswelle des Antriebsstranges positioniert ist. Die Kopplungseinrichtung ist dabei vorteilhaft durch einen an der zumindest einen Bremsbacke vorgesehenen Vorsprung gebildet, der in der gekoppelten Stellung durch eine in der abzubremsenden Welle vorgesehene Durchgangsöffnung in eine Aussparung der Antriebswelle greift, so dass die Antriebswelle und die abzubremsende Welle drehfest miteinander verbunden sind, und der in der entkoppelten Stellung aus dem Eingriff mit der Aussparung der Antriebswelle kommt, so dass die abzubremsende Welle nicht länger von der Antriebswelle angetrieben wird. Auf diese Weise kann eine Entkopplung des Antriebsstranges während des Abbremsvorgangs realisiert werden. Bevorzugt ist der Vorsprung mit der Aussparung formschlüssig in Eingriff, wodurch ein sicherer Eingriff des Vorsprungs in der Aussparung erzielt wird. Hierzu kann der Vorsprung beispielsweise bogenförmig und die Aussparung prismaförmig ausgebildet sein.

Zudem bezieht sich die vorliegende Erfindung auf eine Werkzeugmaschine mit einem Notbremssystem der zuvor beschriebenen Art, wobei es sich bei der Werkzeugmaschine bevorzugt um eine Säge, insbesondere eine Kreissäge handelt, genauer gesagt um eine Tischkreissäge, eine Kapp- und Gehrungssäge oder eine Paneelsäge. Andere Werkzeugmaschine, wie insbesondere eine Bohr- oder Schleifmaschine sind ebenso mit dem erfindungsgemäßen Bremssystem zu versehen.

Es sollte jedoch klar sein, dass das erfindungsgemäße Bremssystem auch auf andere Werkzeugmaschinen anwendbar ist, welche aus spezifischem Anlass auf eine gezielt auslösbare Verzögerung unter gegebenem Zeitrahmen im Bereich weniger Millisekunden angewiesen sind. Eine Anpassung dieser Erfindung an eine andere Werkzeugmaschine ist im Einzelfall möglich.

Ausführungsbeispiele

Nachfolgend werden beispielhafte Ausführungsformen der vorliegenden Erfindung unter Bezugnahme auf die beiliegenden Zeichnungen genauer beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen, weiteren Kombinationen zusammenfassen.

Fig. 1    eine schematische Vorderansicht eines Notbremssystems gemäß einer Ausführungsform der vorliegenden Erfindung in einem Zustand, in dem der Bremsvorgang nicht ausgelöst wurde;

Fig. 2    eine schematische Vorderansicht des in Fig. 1 dargestellten Notbremssystems in einem Zustand, in dem der Abbremsvorgang ausgelöst wurde;

Fig. 3    eine Längsschnittansicht des in den Fig. 1 und 2 dargestellten Notbremssystems in einem Zustand, in dem der Bremsvorgang nicht ausgelöst wurde;

Fig. 4    eine schematische Längsschnittansicht des in den Fig. 1 bis 3 dargestellten Notbremssystems in einem Zustand, in dem der Bremsvorgang ausgelöst wurde;

Fig. 5    eine schematische Querschnittansicht des in den Fig. 1 bis 4 dargestellten Notbremssystems in einem Zustand, in dem der Bremsvorgang nicht ausgelöst wurde;

Fig. 6    eine schematische Querschnittansicht des in den Fig. 1 bis 5 dargestellten Notbremssystems in einem Zustand, in dem der Bremsvorgang ausgelöst wurde;

Fig. 7    eine schematische Darstellung des Aktuators des erfindungsgemäßen Bremssystems;

Fig. 8    eine schematische Darstellung des erfindungsgemäßen Bremssystems inklusive Verriegelungseinrichtung in einer schematisierten Schnittdarstellung;

Fig. 9    ein Ausführungsbeispiel der erfindungsgemäßen Rückstelleinrichtung in Form einer Rückstellfeder an einer Bremsbacke der Vorrichtung;

Fig. 10    eine schematische Zeichnung zur Verdeutlichung der erfindungsgemäßen Halteeinrichtung;

Fig. 11    eine Ausführungsform einer manuellen Rückstelleinrichtung;

Fig. 12    ein Ausführungsbeispiel einer erfindungsgemäßen Werkzeugmaschine in Form einer Tischkreissäge in einer Seitenansicht;

Fig. 13      ein alternatives Ausführungsbeispiel einer erfindungsgemäßen Werkzeugmaschine in Form einer Tischkreissäge in einer Aufsicht;

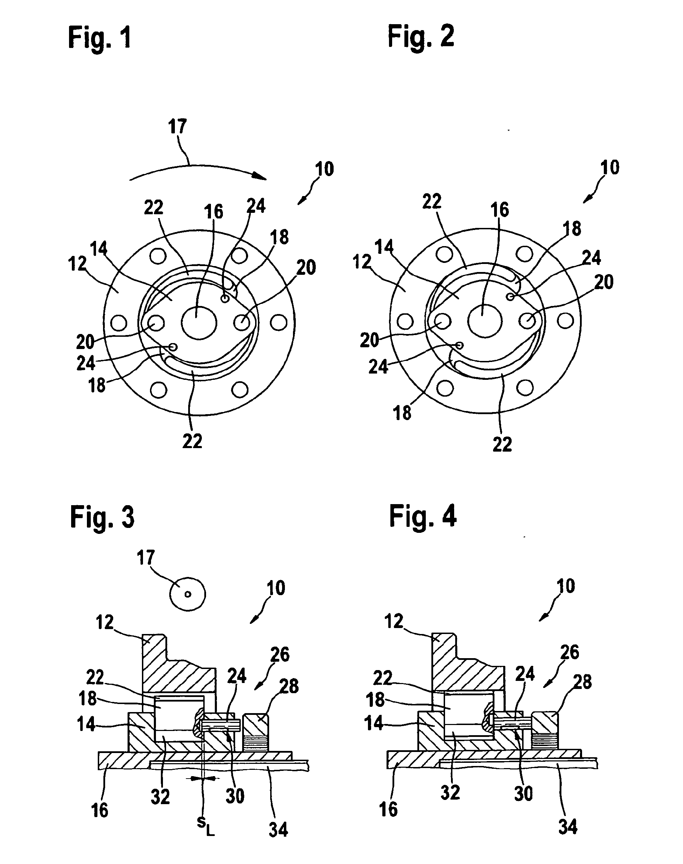

Mit den Figuren 1 bis 8 wird der prinzipielle Aufbau des erfindungsgemäßen Notbremssystems erläutert.

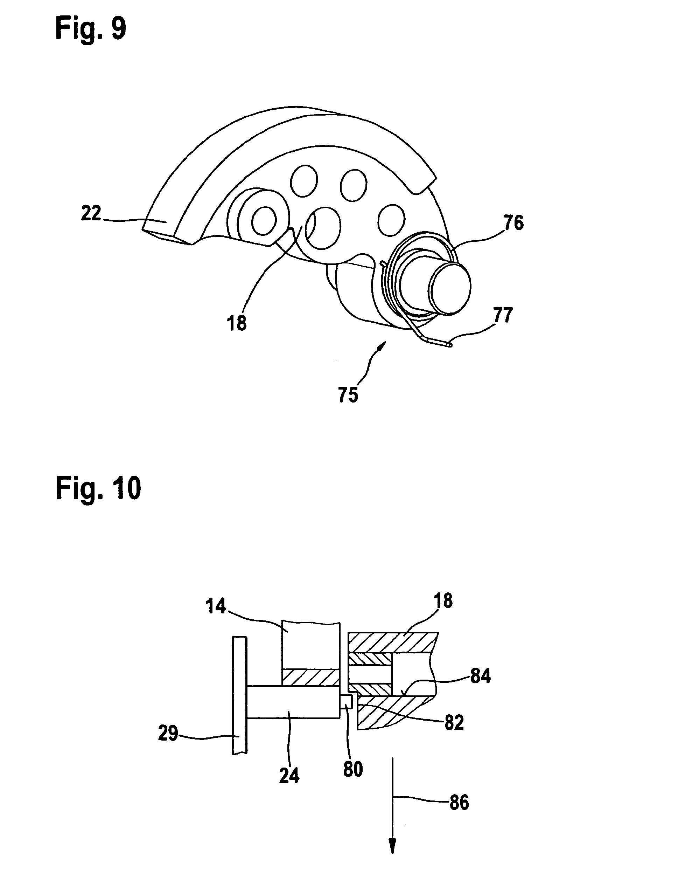

Die Figuren 9, 10 und 11 dienen der Beschreibung von Details der erfindungsgemäßen Rückstelleinrichtung des vorgestellten Bremssystems.

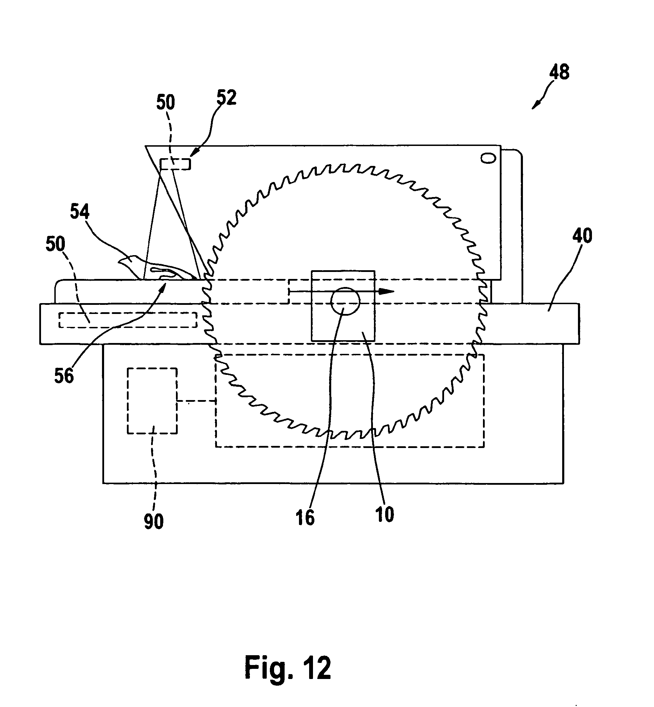

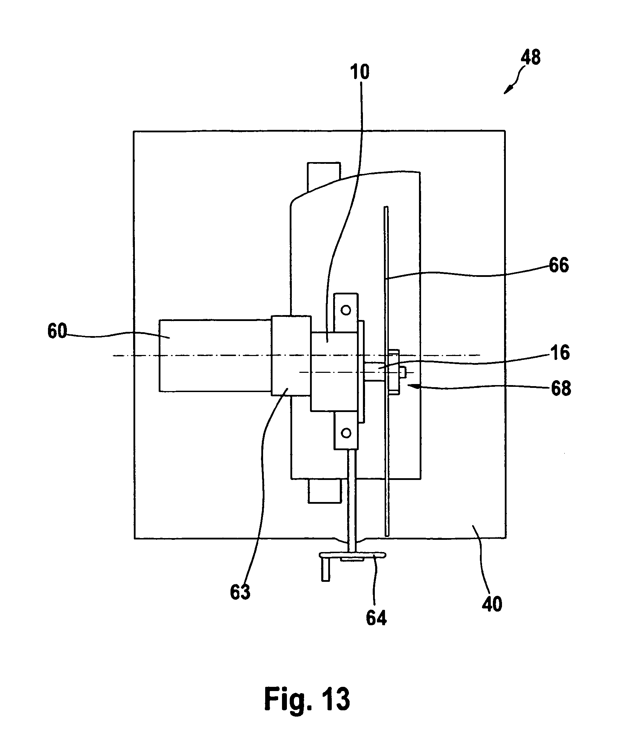

Die Figuren 12 und 13 zeigen eine erfindungsgemäße Werkzeugmaschine in Form einer Tischkreissäge mit einem erfindungsgemäßen Notbremssystem.

Die Fig. 1 bis 6 zeigen schematische Ansichten eines Notbremssystems gemäß einer Ausführungsform der vorliegenden Erfindung, das allgemein mit der Bezugsziffer 10 bezeichnet ist und dazu dient, beispielweise ein Sägeblatt einer Tischkreissäge (hier nicht gezeigt, siehe vielmehr Figur 12 bzw.13) in einer Gefahrensituation innerhalb eines sehr kurzen Zeitraums, der im Bereich weniger Millisekunden liegt, zum Stillstand zu bringen.

Das Notbremssystem 10 umfasst eine feststehende Bremstrommel 12, die an einem nicht näher dargestellten Rahmenbauteil beispielsweise einer Säge befestigt ist. Dieses Rahmenbauteil muss konstruktiv derart ausgelegt sein, dass es den während der Verzögerungsphase entstehenden Bremsmomenten standhält und diese aufnehmen kann. Ferner umfasst das Notbremssystem 10 einen Bremsbackenträger 14, der fest mit einer sägeblattseitigen Abtriebswelle 16 verbunden ist, so dass er mit dieser in der mit dem Pfeil 17 gekennzeichneten Drehrichtung umläuft. An dem Bremsbackenträger 14 sind zwei diametral einander gegenüberliegende Bremsbacken 18 befestigt, die jeweils um einen Schwenkbolzen 20 drehbar gelagert sind. Die Bremsbacken 18 sind an ihrer zur Bremstrommel 12 weisenden Fläche jeweils mit einem Reibbelag 22 versehen, wobei diese Reibbeläge 22 während eines Abbremsvorgangs des Notbremssystems 10 mit der feststehenden Bremstrommel 12 in Eingriff kommen, so dass die Reibbeläge 22 und die Bremstrommel 12 eine Reibpaarung bilden.

In dem in Fig. 1 dargestellten Zustand, in dem der Bremsvorgang noch nicht ausgelöst wurde, werden die Bremsbacken 18 mit Hilfe von Sperrbolzen 24 einer Verriegelungseinrichtung 26 fest an dem Bremsbackenträger 14 gehalten, so dass sie sich nicht um die Schwenkbolzen 20 drehen können. Diese Sperrbolzen 24 sind Teil der Verriegelungseinrichtung 26, die ferner einen Magnet-Aktuator 28 aufweist, mit dem die Sperrbolzen 24 zwischen einer verriegelten Stellung, in der die Bremsbacken 18 an dem Bremsbackenträger 14 gehalten werden, und einer entriegelten Stellung verstellbar sind, in der die Bremsbacken 18 derart freigegeben werden, dass diese eine Schwenkbewegung um ihre Schwenkbolzen 20 in Richtung der Bremstrommel 12 ausführen, um den Bremseingriff zwischen den Reibbelägen 22 und der Bremstrommel 12 zu erzeugen.

Wie es in Fig. 3 gezeigt ist, ist der Magnet-Aktuator 28 der Verriegelungseinrichtung 26 fest an der Abtriebswelle 16 befestigt. Alternativ kann der Magnet-Aktuator 28 auch an einem nicht dargestellten, ortfesten Gehäuseteil befestigt sein und berührungslos auf die Sperrbolzen 24 einwirken. Die Sperrbolzen 24, die durch den Magnet-Aktuator 28 vor- und zurückbewegbar sind, erstrecken sich durch in dem Bremsbackenträger 14 vorgesehene Durchgangsöffnungen 30 und greifen in dem in den Fig. 1, 3 und 5 dargestellten Zustand, in dem der Bremsvorgang noch nicht eingeleitet wurde, in Eingriffsöffnungen 32 ein, die jeweils in den Bremsbacken 18 vorgesehen sind. Auf diese Weise werden die Bremsbacken 18 an dem Bremsbackenträger 14 arretiert.

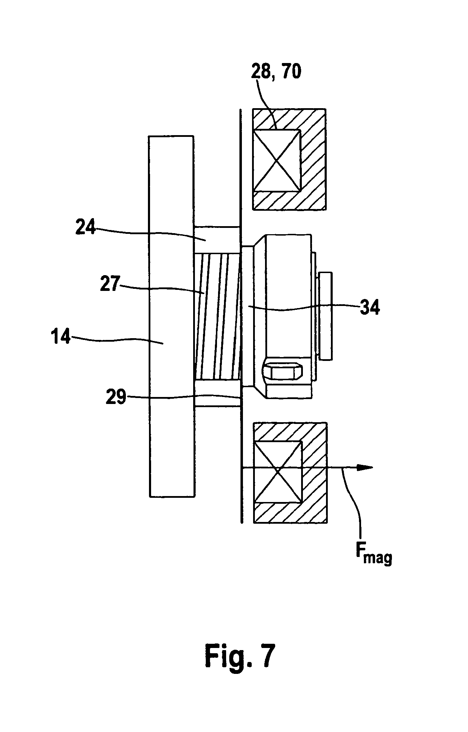

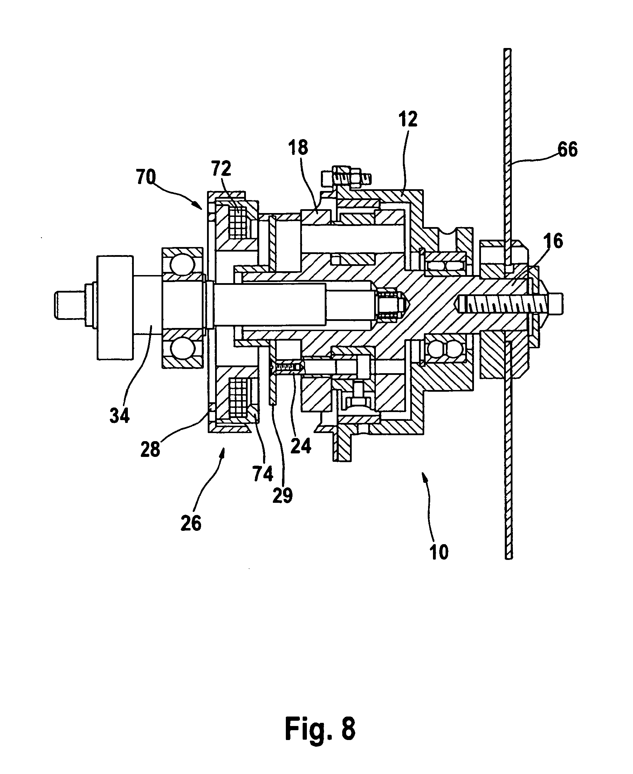

Im Falle der Auslösung des Bremssystems zieht der Magnet-Aktuator 28 einen Ringanker 29, an welchem die Sperrbolzen 24 befestigt sind, um einen definierten Ausrückweg s aus dem Bremsbackenträger 14 und gibt somit die Bremsbacken 18 frei (siehe hierzu Figuren 4 und 8). Diese legen sich infolge der durch die umlaufende Abtriebswelle 16 erzeugten Fliehkräfte bzw. der Fliehbeschleunigung an die feststehende Bremstrommel 12 an, wodurch die zur Verzögerung der Abtriebswelle 16 erforderliche Reibpaarung zwischen den Reibbelägen 22 der Bremsbacken 18 und der Bremstrommel 12 gebildet wird. Auch wenn die Sperrbolzen 24 bei dem vorliegenden Ausführungsbeispiel mit Hilfe des Magnet-Aktators 28 vor- und zurückbewegt, sei darauf hingewiesen, dass die Sperrbolzen 24 alternativ auch unter der Wirkung einer Federkraft 27 oder dergleichen in einer der beiden Bewegungsrichtungen bewegt werden können. So kann die Vorwärtsbewegung der Sperrbolzen 24 unter Einfluss des Magnet-Aktuators 28 erfolgen, während die Zurückstellung der Sperrbolzen 24 durch ein oder mehrere Federelemente 27 erfolgt, oder umgekehrt (siehe hierzu beispielsweise Figur 7).

Der im Auslösefall angesteuerte Magnetaktuator 28 besteht aus einem Magnetkreis 70, bestehend aus Spule 72 und magnetischem Rückschluss 74, welcher im Auslösefall aktiviert werden kann. Wie insbesondere in Figur 3 und 7 dargestellt, wird der Anker 29 in einem definierten Abstand zum Aktuator 28 platziert. Dieser Abstand bildet zugleich das Überstandsmaß $s_L$ der Sperrbolzen 24 im Bremssystem.

Durch eine Magnetkraft $F_{mag}$ kann dieser Anker 29 vom Magnetkreis 70 angezogen werden, wodurch die Sperrbolzen 24 des Bremssystems eine gleichbedeutende Bewegung ausführen. Hierdurch wird das Bremssystem 10 aktiviert. Der Magnetaktuator 28 ist hierbei stets fest, beispielsweise am Gehäuse, angebracht, um die Kraft $F_{mag}$ abstützen zu können.

Es versteht sich, dass die Betätigung des Magnet-Aktuators 28 durch Ausgangssignale entsprechender Sensoren erfolgt, die einen Zustand erfassen, in dem ein Bediener gefährlich nahe an das Sägeblatt der Tischkreissäge kommt. Derartige Sensoren, die die Detektion insbesondere von menschlichem Gewebe aber auch von anderen Materialien ermöglichen, können beispielsweise und nicht abschließend Radarsensoren, insbesondere UWB-Radarsensoren (UWB = Ultra Wide Band) und / oder auch optische Sensoren, insbesondere NIR-Systeme (NIR = Near Infra Red) sein. Derartige Sensoren sind im Stand der Technik bekannt, weshalb auf diese in der vorliegenden Beschreibung nicht näher eingegangen wurde.

Figur 9 zeigt die Anordnung von Bremseinrichtung 10 inklusive der Verriegelungseinrichtung 26 in einer Übersicht.

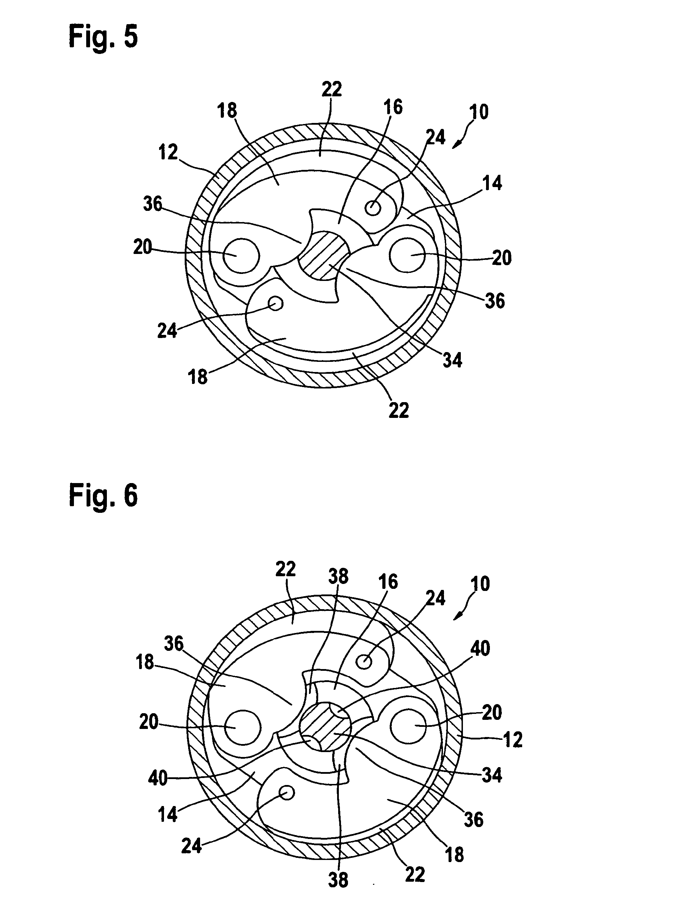

Wie es insbesondere auch aus den Fig. 5 und 6 hervorgeht, ist die mit Hilfe des Notbremssystems 10 abzubremsende Abtriebswelle 16 als Hohlwelle ausgebildet, in deren Hohlraum eine Antriebswelle 34 aufgenommen ist, die einen Teil des nicht näher dargestellten Antriebsstranges bildet. Um die Abtriebswelle 16 und die Antriebswelle 34 drehfest miteinander zu verbinden, sind an den Bremsbacken 18 in Richtung des Mittelpunktes der Abtriebswelle 16 und der Antriebswelle 34 vorstehende bogenförmige Vorsprünge 36 ausgebildet, die jeweils durch Durchgangsöffnungen 38, die in der Abtriebswelle 16 vorgesehen sind, hindurch greifen und in prismaförmige Aussparungen 40 der Antriebswelle 34 eingreifen, wie es in Fig. 5 dargestellt ist. Durch den Eingriff der an den Bremsbacken 18 vorgesehenen Vorsprünge 36 in die entsprechenden Aussparungen 40 der Antriebswelle 34 werden die Abtriebswelle 16 und die Antriebswelle 34 drehfest miteinander verbunden.

Wird der Bremsvorgang ausgehend von dem in Fig. 5 dargestellten Zustand eingeleitet, so drehen sich die Bremsbacken 18, nachdem die Sperrbolzen 24 um den Ausrückweg s aus den Bremsbacken 18 gezogen wurden, um ihre jeweiligen Schwenkbolzen 20 in Richtung der Bremstrommel 12, so dass die an den Bremsbacken 18 angeordneten Vorsprünge 36 aus dem Eingriff mit den zugeordneten Aussparungen 40 der Antriebswelle 34 kommen, wodurch die Antriebswelle 34 von der Abtriebswelle 16 entkoppelt wird. Durch diese Entkopplung wird der Antriebsstrang nicht den während des Abbremsvorgangs erzeugten Verzögerungsmomenten ausgesetzt, so dass dieser nicht beschädigt werden kann. Zudem ist es möglich, die Komponenten des Antriebsstranges weniger robust auszuführen, da diese während des Abbremsvorgangs keinen großen Belastungen unterliegen. So kann beispielsweise der Querschnitt der motorseitigen Antriebswelle 34 kleiner als in demjenigen Fall ausgeführt werden, in dem keine Entkopplungseinrichtung zum Entkoppeln des Antriebsstranges vorgesehen ist. Entscheidend ist jedoch der sich hieraus ergebende Vorteil, dass die Anzahl der zu verzögernden Komponenten auf ein Minimum reduziert wird. Dies wirkt sich während der Verzögerungsphase positiv auf die Systemlast aus, wie es zuvor bereits beschrieben wurde.

In Abhängigkeit der geometrischen Abmessungen der Konstruktion des Bremssystems definiert sich dessen Verstärkungsfaktor C*, wobei dieser für den vorliegenden Aufbau im Bereich der Selbstverstärkung oder der Selbsthemmung des Systems liegt. Für diesen Fall der Selbstverstärkung oder der Selbsthemmung des Systems wird nur ein kurzer Impuls zur Bildung der Reibpaarung benötigt, da die Bremsbacken 18 infolge des auftretenden Kräftegleichgewichts an die Bremstrommel 12 gepresst werden.

Der Verstärkungsfaktor definiert sich weiterhin wie folgt:

$$C^* = \frac{F_R}{F_{SP}} = \frac{\mu \cdot \tan \alpha}{\tan \alpha - \mu}$$

Ist der Faktor C* positiv, so wirken die Kräfte in dem in der Skizze angenommenen Richtungssinn. Die Reibkraft $F_R$ ergibt sich hierbei aus der um den Faktor C* verstärkten Spannkraft $F_{SP}$. Für $\mu = \tan \alpha$ weist die Gleichung für C* eine Polstelle auf, so dass dieser Verstärkungsfaktor gegen Unendlich geht. In diesem Punkt herrscht praktisch der Systemzustand eines labilen Gleichgewichts. Für die Wahl der Parameter $\tan \alpha < \mu$ ergibt sich ein negativer Verstärkungsfaktor C*. Dies bedeutet eine theoretische Umkehr des Richtungssinns der Spannkraft $F_{SP}$, welche eintreten müsste, um das Kräftegleichgewicht aufrecht zu erhalten. In Realität kennzeichnet dieser Fall einen speziellen Zustand eines selbstverstärkenden Systems. Der Reibklotz wird hier durch die resultierende Reibkraft F zusätzlich an das Laufband gepresst. Aufgrund der somit entstehenden, stetigen, wechselseitigen Erhöhung der Reib- und Normalkräfte tritt im Idealfall nach kurzer Zeit Haftreibung innerhalb der Reibpaarung auf. Diese führt in Folge zur Blockierung des gesamten Systems. In diesem Zusammenhang wird gemeinhin von Selbsthemmung gesprochen. In vorteilhafter Weise treten dabei Kräfte auf, die größer sind, als die durch die Fliehkraft der Bremsbacken vermittelten Kräfte.

In Abhängigkeit von dem relativen Reibkoeffizienten $\mu$ der Reibpartner ergeben sich somit Winkel $\alpha$, die Bereiche bezeichnen, in denen Selbstverstärkung bzw. Selbsthemmung auftritt. Es könnte hierbei vorteilhaft sein, den Reibbelag zumindest eines Reib- bzw. Bremspartners inhomogen zu gestalten.

Aufgrund der Verwendung eines zweiseitigen Angriffes der Reibumfangskraft der Reibpaarung werden die vorliegenden eingesetzten Wälzlagerungen geschont und müssen aufgrund von Belangen der Dauerhaltbarkeit des Gesamtsystems nicht überarbeitet oder gar neu konzipiert werden, wodurch wiederum eine erhöhte Massenträgheit ins System eingebracht würde.

Durch einen Aufbau, wie er vorliegend beschrieben wurde, werden zudem umlaufende Außengeometrien der Bremseinheit vermieden, wodurch ein leicht zu kapselndes, geschlossenes System mit kompaktem Aufbau realisiert werden kann, welches sich zusätzlich positiv in die speziellen Belange des Arbeitsschutzes im Umgang mit Werkzeugmaschinen eingliedert.

Die detaillierte Beschreibung einer möglichen Rückstelleinrichtung bzw. der Rückstellmittel soll anhand einer speziellen Ausführungsvariante stattfinden, welche jedoch nicht die einzig denkbare Form des Systems darstellt.

Um ein erneutes Einfinden der Bremsbacken 18 in die Schlüsselflächen 40 der Antriebswelle 34 zu ermöglichen, sind die in Figur 9 dargestellten Rückstellfedern 76 als Rückstellelemente einer Rückstelleinrichtung 75 vorgesehen. Diese Rückstellfedern 76 können sowohl als Duck- als auch als Zugfedern ausgebildet sein. Mittels dieser Federelemente 76 können beide Bremsbacken 18 nach erfolgter Bremsung unabhängig von der Stellung der Abtriebswelle 16 zurück in Richtung auf die Antriebswelle 34 bewegt werden. An einem Ende 77 der Federn sind diese Rückstellmittel 76 mit dem Bremsbackenträger 14 verbunden. Somit erzeugt die Rückstelleinrichtung eine Rückführkraft auf die Bremsbacken in Richtung des Pfeils 86. Die Federkraft ist hierbei gegenüber der die Bremsung einleitenden Fliehkraft - die in entgegengesetzter Richtung wirkt - gering, so dass ein Einfluss der Rückstellmittels 76 auf die Auslösezeit der Bremse vernachlässigt werden kann.

Zu beachten ist jedoch, dass aufgrund der Motorabkopplung die Antriebswelle 34 weiterhin ausdreht, obwohl die Reibpaarung die Abtriebswelle 16 bereits bis zum Stillstand verzögert hat. Aufgrund dessen bestünde ohne den Einsatz spezieller Konstruktionselemente die Gefahr eines möglichen "Kupplungsrasselns" mit frühzeitig einhergehendem Verschleiß der Formelemente während des Motorauslaufs. Eine in Figur 10 dargestellte Haltevorrichtung verhindert dies, indem ein als Haltenase 80 ausgebildetes Halteelement, welche als Funktionselement am Sperrbolzen 24 vorliegt, in eine Einfräsung 82 am jeweiligen Bremsbacken 18 eingreift und diesen somit in der Bremsstellung hält. Ohne ein Signal zum Rücksetzen des Systems, welches von einer Ansteuerelektronik (90) des Systems (siehe beispielsweise Figur 12), jedoch auch als bewusste Handlung durch den Anwender erfolgen kann, bleibt das System in diesem geometrisch eindeutigen Zustand, so dass einerseits die Kupplungselemente während des Auslaufens des Motors geschont werden und andererseits keine ungewollte Rücksetzung des Systems stattfindet.

Falls rechtliche Bestimmungen ein bewussten Rücksetzens des Sicherheitssystems durch den Anwender erforderlich machen sollten, kann es von Vorteil sein, die Rückstelleinrichtung 75 voll mechanisch zu gestalten, so dass das System bzgl. einer Rücksetzung in den Bereitschaftszustand nur auf eine bewusste Handlung des Anwenders reagiert.

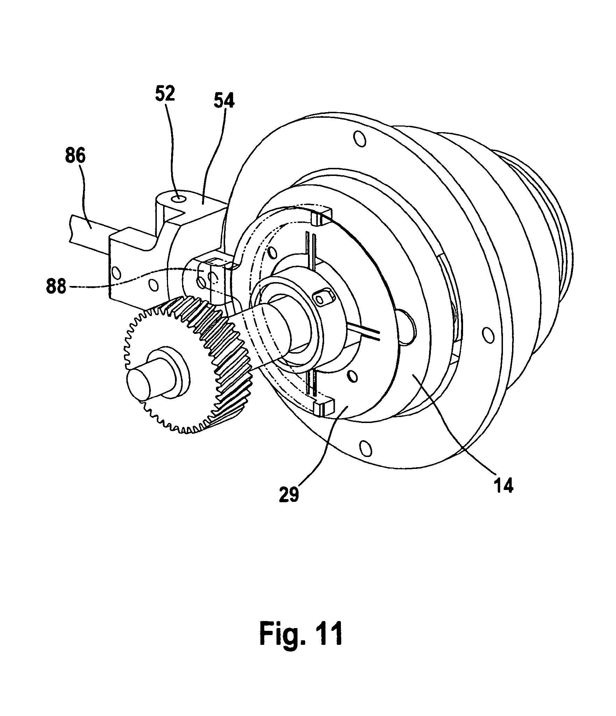

Eine solche hierfür geeignete, manuelle Rückstelleinrichtung 75 ist in Abbildung 11 dargestellt. Wird der Rückstellhebel 86 durch den Anwender bewegt, so wird diese Bewegung mittels einer Ausrückgabel 88 auf die Ankerplatte 29 des Auslösesystems übertragen. Der Rückstellhebel kann dabei beispielsweise über einen Drehpunkt 52 an einer Gehäusefestigung 54 bewegt werden. Somit werden die Sperrbolzen 24 erneut gezogen, so dass die Halteelemente 80 der Sperrbolzen 24 die Bremsbacken 18 wieder freigeben.

Hierdurch kann die Rückstellkraft der Schenkelfedern 76 die Bremsbacken 18 in Richtung der Antriebswelle 34 bewegen, so dass ein erneuter Formschluss zwischen An- und Abtriebsseite des Systems stattfinden kann. Somit treten die federbelasteten Sperrbolzen 24 erneut in die Bohrungen 84 der Bremsbacken 18 und das System geht in den Bereitschaftszustand über. Selbstverständlich kann diese Reaktion auch durch die Ansteuerelektronik veranlasst werden, so dass ein automatisiertes Rücksetzen nach erfolgter Bremsung eintritt

Die Figuren 12 und 13 zeigen Ausführungsbeispiele einer erfindungsgemäßen Werkzeugmaschine, mit einem Notbremssystem 10 und einem Sensorsystem 52 zur Anwesenheitserkennung einer Materialart, insbesondere von Gewebe, wie dem menschlichen Gewebe einer Hand. Die in einer Seitenansicht dargestellte Kreissäge 48 der Figur 12 ist eine Tischkreissäge (Benchtop-System) und weist eine Erkennungsvorrichtung 52 auf, die zur Anwesenheitserkennung einer Materialart 54, insbesondere beispielsweise von Gewebe, in einem Werkzeugmaschinenarbeitsbereich 56 vorgesehen ist. Die Vorrichtung 52 zur Detektion weist zumindest einen Sensor 50 auf, der in einer Ebene oberhalb des Arbeitsbereiches der Werkzeugmaschine installiert sein kann, wie dies in Figur 10 angedeutet ist. Alternativerweise kann der Sensor 50 der Vorrichtung 52 auch direkt im Arbeitstisch 40 integriert werden. Beide Möglichkeiten können sowohl einzeln, als auch gleichzeitig realisiert sein, wie dies in Figur 12 beispielhaft dargestellt ist. Die Vorrichtung 52 zur Detektion insbesondere von menschlichem Gewebe aber auch von anderen Materialien kann beispielsweise und nicht abschließend Radarsensoren, insbesondere UWB-Radarsensoren (UWB = Ultra Wide Band) und / oder auch optische Sensoren, insbesondere NIR-Systeme (NIR = Near Infra Red) umfassen.

Bei Detektion beispielsweise einer Hand 54 im Gefahrenbereich unmittelbar vor dem Sägeblatt der Werkzeugmaschine wird eine Aktivitätssignal generiert, welches einen Aktuator 28 aktiviert, der die Sicherungsbolzen 24 der Bremsbacken 18 löst, so dass diese - wie oben im Detail beschrieben - durch die Fliehkraft getrieben gegen die Bremstrommel 12 getrieben werden und den Abbremsvorgang einleiten.

Figur 13 zeigt das Ausführungsbeispiel einer Tischkreissäge 48 in einer Aufsicht. Ein Motor 60 treibt vermittelt über ein Getriebe 63 ein Werkzeug an, welches im Ausführungsbeispiel der Figur 13 ein Sägeblatt 66 ist. Das Sägeblatt 66 ist über eine Spannvorrichtung 68 auf einer Abtriebswelle 16 befestigt. Das Notbremssystem 10 ist dabei in vorteilhafter Weise zwischen dem Getriebe 63 und der Welle 16 angeordnet, d.h. ermöglicht es, im Aktivierungsfall, die Welle 16 vom antreibenden Getriebe 63 zu entkoppeln. Im Falle einer Notbremsung wird dadurch eine Überlastung der Getriebestufe vermieden. Getriebestufe und Motorwelle werden dann folgerichtig voneinander abgekoppelt.

Auch wenn bei der zuvor beschriebenen Ausführungsform eine Tischkreissäge als Beispiel einer Werkzeugmaschine gewählt wurde, sollte klar sein, dass das Prinzip der vorliegenden Erfindung auch auf andere Werkzeugmaschinen anwendbar ist. Schließlich sollte klar sein, dass die zuvor beschriebene Ausführungsform des erfindungsgemäßen Notbremssystems in keiner Weise einschränkend ist. Vielmehr sind Modifikationen und Änderungen möglich, ohne den Schutzbereich der vorliegenden Erfindung zu verlassen, der durch die beiliegenden Ansprüche definiert ist.

**Patentansprüche**

1. Notbremssystem (10) für eine Werkzeugmaschine, zum abrupten Abbremsen einer umlaufenden Welle (16), umfassend zumindest eine Bremstrommel (12) und zumindest eine Bremsbacke (18), die zum Abbremsen der Welle (16), miteinander in Eingriff gebracht werden, wobei der Bremseingriff zwischen der Bremstrommel (12) und der Bremsbacke (18) unter dem Einfluss einer aus der Rotation einer Welle (16) resultierenden Fliehkraft erfolgt, **dadurch gekennzeichnet, dass** zumindest eine Rückstelleinrichtung (75) vorhanden ist, die es ermöglicht, die Bremsbacken (18) nach erfolgter Abbremsung in Richtung ihrer Ausgangslage zurückzusetzen.

2. Notbremssystem (10) nach Anspruch 1, **dadurch gekennzeichnet, dass** Rückstellmittel (76) der Rückstelleinrichtung (75) an den Bremsbacken (18) ausgebildet sind.

3. Notbremssystem (10) nach Anspruch 1, **dadurch gekennzeichnet, dass** Rückstellmittel der Rückstelleinrichtung (75) an der Bremstrommel (12) ausgebildet sind.

4. Notbremssystem (10) nach einem der vorhergehenden Ansprüche, **dadurch gekennzeichnet, dass** die Rückstellmittel (76) nach einer Systementscheidung über die erneute Inbetriebnahme des Systems zur Rücksetzung des Bremssystems aktivierbar sind.

5. Notbremssystem (10) nach einem der vorhergehenden Ansprüche, **dadurch gekennzeichnet, dass** zumindest eine Haltevorrichtung vorgesehen ist, welche es ermöglicht, die Bremsbacken (18) nach erfolgter Bremsung in einer definierten Bremsstellung zu halten.

6. Notbremssystem (10) nach Anspruch 5, **dadurch gekennzeichnet, dass** die Haltevorrichtung zumindest ein Halteelement (80) aufweist, welches in der Bremsstellung zumindest einer Bremsbacke (18) in die Bremsbacke eingreift.

7. Notbremssystem (10) nach Anspruch 5 oder 6, **dadurch gekennzeichnet, dass** die Haltevorrichtung oder zumindest ein Halteelement (80) an zumindest einem Sperrelement (24) einer Verriegelungseinrichtung (26) der Bremsbacken (18) angeordnet ist.

8. Notbremssystem (10) nach Anspruch 5, 6 oder 7, **dadurch gekennzeichnet, dass** die Haltevorrichtung nach einer Systementscheidung zur erneuten Inbetriebnahme des Systems deaktiviert wird.

9. Notbremssystem (10) nach einem der vorhergehenden Ansprüche, **dadurch gekennzeichnet, dass** Rückstellmittel (76) der Rückstelleinrichtung (75) automatisch getrieben sind.

10. Notbremssystem (10) nach einem der vorhergehenden Ansprüche, **dadurch gekennzeichnet, dass** die Rückstelleinrichtung (75) zumindest ein elastisches Federelement (76) aufweist.

11. Notbremssystem (10) nach Anspruch 4, **dadurch gekennzeichnet, dass** die Federkraft des Federelementes (76) kleiner ist als die die Bremsung einleitende Fliehkraft.

12. Notbremssystem (10) nach einem der vorhergehenden Ansprüche 1 bis 8, **dadurch gekennzeichnet, dass** Rückstellmittel (86,88) der Rückstelleinrichtung (75) manuell getrieben sind.

13. Werkzeugmaschine mit einem Notbremssystem (10) nach einem der vorhergehenden Ansprüche.

14. Werkzeugmaschine nach Anspruch 13, **dadurch gekennzeichnet, dass** die Werkzeugmaschine eine Säge, vorzugsweise eine Kreissäge und insbesondere eine Tischkreissäge (48) ist

**Claims**

1. Emergency braking system (10) for a machine tool, for abruptly braking a rotating shaft (16), comprising at least one brake drum (12) and at least one brake block (18) which are brought into engagement with one another in order to brake the shaft (16), wherein the braking engagement between the brake drum (12) and the brake block (18) takes place under the influence of a centrifugal force that results from the rotation of a shaft (16), **characterized in that** there is provided at least one restoring device (75) which makes it possible to return the brake blocks (18) in the direction of their starting position once braking has taken place.

2. Emergency braking system (10) according to Claim 1, **characterized in that** restoring means (76) of the restoring device (75) are formed on the brake blocks (18).

3. Emergency braking system (10) according to Claim 1, **characterized in that** restoring means of the restoring device (75) are formed on the brake drum (12).

4. Emergency braking system (10) according to one of the preceding claims, **characterized in that** the restoring means (76) are activatable following a system decision via the restarting of the system for restoring the braking system.

5. Emergency braking system (10) according to one of the preceding claims, **characterized in that** there is provided at least one holding apparatus which makes it possible to hold the brake blocks (18) in a defined braking position after braking has taken place.

6. Emergency braking system (10) according to Claim 5, **characterized in that** the holding apparatus has at least one holding element (80) which, in the braking position of at least one brake block (18), engages in the brake block.

7. Emergency braking system (10) according to Claim 5 or 6, **characterized in that** the holding apparatus or at least one holding element (80) is arranged on at least one blocking element (24) of a locking device (26) of the brake blocks (18).

8. Emergency braking system (10) according to Claim 5, 6 or 7, **characterized in that** the holding apparatus is deactivated following a system decision for restarting the system.

9. Emergency braking system (10) according to one of the preceding claims, **characterized in that** restoring means (76) of the restoring device (75) are operated automatically.

10. Emergency braking system (10) according to one of the preceding claims, **characterized in that** the restoring device (75) has at least one elastic spring element (76).

11. Emergency braking system (10) according to Claim 4, **characterized in that** the spring force of the spring element (76) is less than the centrifugal force that initiates braking.

12. Emergency braking system (10) according to one of the preceding Claims 1 to 8, **characterized in that** restoring means (86, 88) of the restoring device (75) are operated manually.

13. Machine tool having an emergency braking system (10) according to one of the preceding claims.

14. Machine tool according to Claim 13, **characterized in that** the machine tool is a saw, preferably a circular saw and in particular a circular saw bench (48).

**Revendications**

1. Système de frein de secours (10) pour une machine-outil, pour freiner brusquement un arbre en rotation (16), comprenant au moins un tambour de frein (12) et au moins une mâchoire de frein (18) qui sont amenés en prise l'un avec l'autre pour freiner l'arbre (16), l'engagement de freinage entre le tambour de frein (12) et la mâchoire de frein (18) s'effectuant sous l'influence d'une force centrifuge résultant de la rotation d'un arbre (16), **caractérisé en ce qu'**au moins un dispositif de rappel (75) est prévu, lequel permet de ramener les mâchoires de frein (18) dans la direction de leur position de départ une fois le freinage effectué.

2. Système de frein de secours (10) selon la revendication 1, **caractérisé en ce que** des moyens de rappel (76) du dispositif de rappel (75) sont réalisés sur les mâchoires de frein (18).

3. Système de frein de secours (10) selon la revendication 1, **caractérisé en ce que** des moyens de rappel du dispositif de rappel (75) sont réalisés sur le tambour de frein (12).

4. Système de frein de secours (10) selon l'une quelconque des revendications précédentes, **caractérisé en ce que** les moyens de rappel (76) peuvent être activés en fonction d'une décision du système concernant la remise en marche du système pour ramener le système de frein.

5. Système de frein de secours (10) selon l'une quelconque des revendications précédentes, **caractérisé en ce qu'**au moins un dispositif de retenue est prévu, lequel permet de retenir les mâchoires de frein (18) dans une position de freinage définie une fois le freinage effectué.

6. Système de frein de secours (10) selon la revendication 5, **caractérisé en ce que** le dispositif de retenue présente au moins un élément de retenue (80) qui vient en prise dans la mâchoire de frein dans la position de freinage d'au moins une mâchoire de frein (18).

**7.** Système de frein de secours (10) selon la revendication 5 ou 6, **caractérisé en ce que** le dispositif de retenue ou au moins un élément de retenue (80) est disposé sur au moins un élément de blocage (24) d'un dispositif de verrouillage (26) des mâchoires de frein (18).

**8.** Système de frein de secours (10) selon la revendication 5, 6 ou 7, **caractérisé en ce que** le dispositif de retenue est désactivé en fonction d'une décision du système concernant la remise en marche du système.

**9.** Système de frein de secours (10) selon l'une quelconque des revendications précédentes, **caractérisé en ce que** des moyens de rappel (76) du dispositif de rappel (75) sont entraînés automatiquement.

**10.** Système de frein de secours (10) selon l'une quelconque des revendications précédentes, **caractérisé en ce que** le dispositif de rappel (75) présente au moins un élément de ressort élastique (76).

**11.** Système de frein de secours (10) selon la revendication 4, **caractérisé en ce que** la force de ressort de l'élément de ressort (76) est inférieure à la force centrifuge initiant le freinage.

**12.** Système de frein de secours (10) selon l'une quelconque des revendications précédentes 1 à 8, **caractérisé en ce que** des moyens de rappel (86, 88) du dispositif de rappel (75) sont entraînés manuellement.

**13.** Machine-outil comprenant un système de frein de secours (10) selon l'une quelconque des revendications précédentes.

**14.** Machine-outil selon la revendication 13, **caractérisée en ce que** la machine-outil est une scie, de préférence une scie circulaire et notamment une scie circulaire à table de menuisier (48).

**Fig. 1**

**Fig. 2**

**Fig. 3**

**Fig. 4**

## Fig. 5

## Fig. 6

**Fig. 7**

**Fig. 8**

# Fig. 9

# Fig. 10

**Fig. 11**

**Fig. 12**

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19536995 A1